# EUROPÄISCHE PATENTSCHRIFT

(11) **EP 0 733 328 B1**
(45) Veröffentlichungstag und Bekanntmachung des Hinweises auf die Patenterteilung: **16.12.1998**
(21) Anmeldenummer: 96103779.3
(22) Anmeldetag: 11.03.1996
(51) Int. Cl.: A47G 7/06, A47G 33/02, A01G 27/02

(54) **- Weihwasserbecken**
- Font for holy water
- Bénitier

(30) Priorität: 20.03.1995 AT 485/95
(43) Veröffentlichungstag der Anmeldung: 25.09.1996
(73) Patentinhaber: Heeb, Albin, 9464 Lienz (CH)
(72) Erfinder: Heeb, Albin, CH-9464 Lienz (CH); Eichmüller, Karl, CH-9463 Oberriet (CH)
(74) Vertreter: Hefel, Herbert, Dipl.-Ing.

(56) Entgegenhaltungen:
- WO-A-95/24826
- CH-A- 171 748
- DE-C- 242 226
- FR-A- 2 400 323
- FR-E- 87 614
- US-A- 1 852 460

## Beschreibung

Die Erfindung bezieht sich auf ein Weihwasserbecken mit einem nach oben offenen Behälter zur Aufnahme einer zu versprengenden Weihwassermenge.

Weihwasserbecken für Grabstätten und Gedenkstätten u.dgl. sind in zahlreichen Ausführungsformen bekannt. Sie bestehen aus einem schalen- oder beckenartigen Teil für die Aufnahme des Weihwassers, in der Regel mit einem borsten- oder bürstenbesetzten Weihwassersprenger. Das Aufnahmevolumen dieser Weihwasserbecken ist in der Regel sehr gering, so daß insbesondere in der heißen Jahreszeit und wenn das Weihwasserbecken der Sonneneinstrahlung direkt ausgesetzt ist, regelmäßig und in kurzen Zeitintervallen Weihwasser nachgefüllt werden muß. Aus diesem Grunde wurden solche Weihwasserbecken mit einem Deckel versehen, der eine Öffnung besitzt, durch welche der Weihwasserspender in das eigentliche Becken eingeführt werden kann. Dieser Weihwassersprenger trägt inseitig einen Hohlkörper mit zahlreichen Öffnungen, durch welche das Weihwasser in diesen Hohlkörper einfließt, wenn der Weihwassersprenger in das Weihwasserbecken gelegt ist. Beim Gebrauch des Weihwassersprengers wird dieser hin und her bewegt, wodurch das im Hohlkörper befindliche Weihwasser durch die erwähnten Löcher herausgeschleudert und verspritzt wird (CH-A-171748).

Ein anderer bekannter Weihwassersprenger (US-A-1 852 460) besitzt einen hohlen Handgriff, der einerseits mit einem Schraubbolzen verschließbar ist und der andererseits einen gelochten Hohlkörper trägt. Im hohlen Handgriff ist eine Ventilkugel frei beweglich gelagert, für welche unmittelbar im Bereich des Hohlkörpers ein Dichtsitz vorgesehen ist. Der gelochte Hohlkörper ist zum Teil mit einer schwammartigen Masse gefüllt. In aufrechter Stellung und bei abgenommenem Schraubbolzen wird Weihwasser in den Handgriff eingefüllt. Solange der Weihwassersprenger aufrecht steht, verschließt die Ventilkugel den Dichtsitz und verhindert so, daß Weihwasser in den Hohlkörper eindringen kann. Wird der Weihwassersprenger in Schräglage hin und her bewegt, so gibt die Ventilkugel den Ventilsitz frei, und Weihwasser kann aus dem eigentlichen hohlen Griff in den Hohlkörper gelangen und hier durch die Löcher austreten. Die erwähnte schaumartige Masse begrenzt den Durchfluß.

Ausgehend von diesem Stand der Technik zielt die Erfindung darauf ab, ein Weihwasserbecken in der Weise auszubilden, daß es ein ausreichend großes Volumen an Weihwasser aufnehmen kann, sozusagen in einem Reservebehälter, und daß trotzdem für den unmittelbaren Verbrauch mittels eines Weihwassersprengers nur eine geringe Menge bereitgestellt ist. Erfindungsgemäß gelingt die Lösung dieser Aufgabe dadurch, daß ein zweiter, verschließbarer Behälter zur Aufnahme einer Vorratsmenge des Weihwassers vorgesehen ist und beiden Behältern zumindest eine Behälterwand gemeinsam ist und daß die beiden Behältern gemeinsame Behälterwand mindestens zwei, die von den Behältern begrenzten Räume miteinander verbindende Öffnungen aufweist, wobei die eine Öffnung im bodennahen Bereich der beiden Behälter vorgesehen ist und die andere Öffnung oberhalb der im bodennahen Bereich angeordneten Öffnung in der Höhe vorgesehen ist, die etwa als Niveau für die zu versprengende Weihwassermenge bestimmt ist. Zweckmäßige Ausgestaltungen der Erfindung sind in den Unteransprüchen festgeschrieben.

Um die Erfindung zu veranschaulichen, werden zwei Ausführungsbeispiele anhand der Zeichnung näher erläutert. Es zeigen:

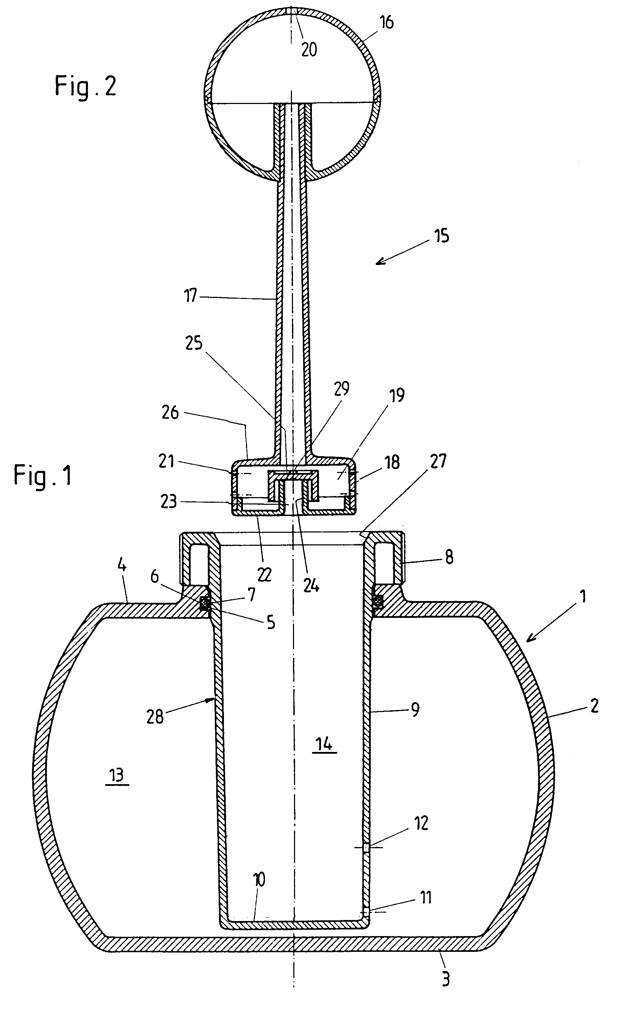

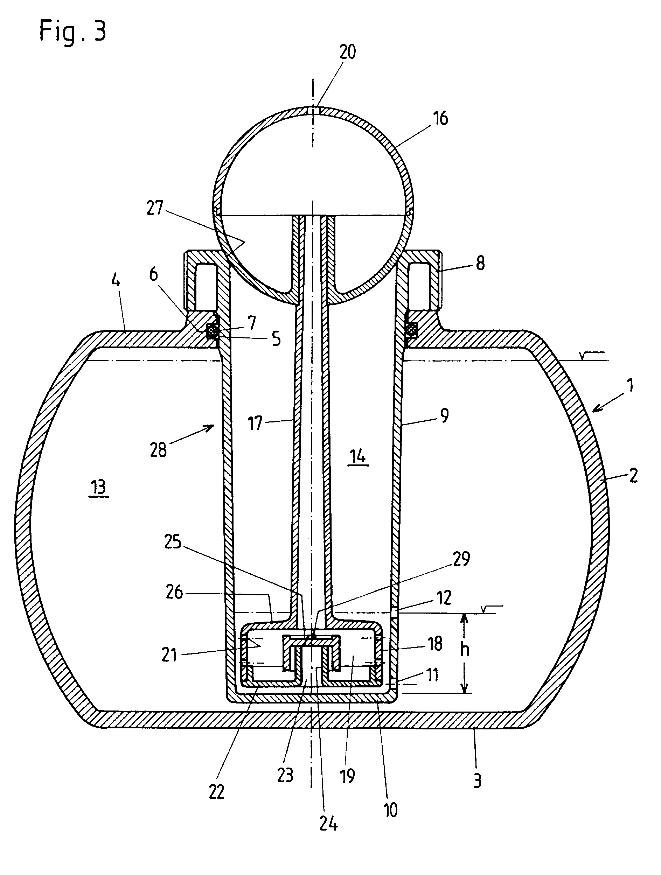

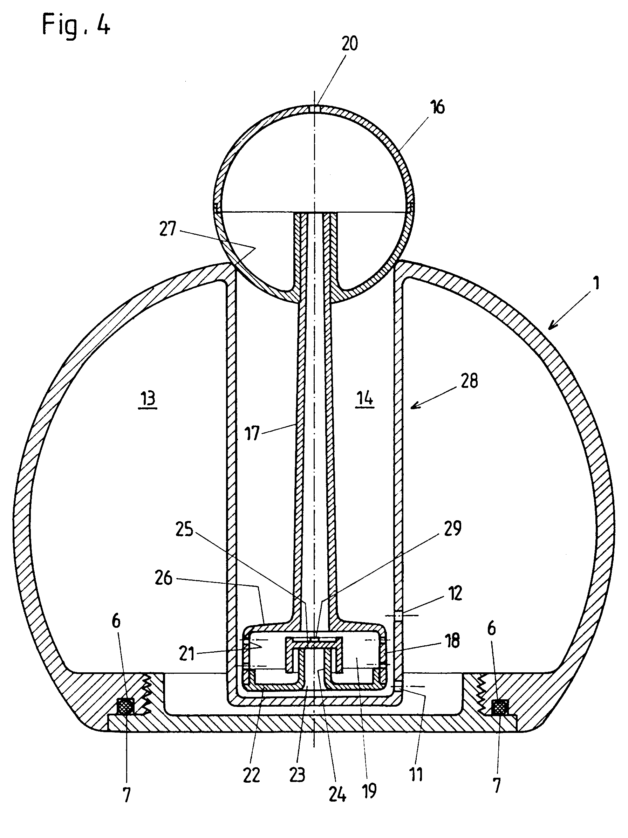

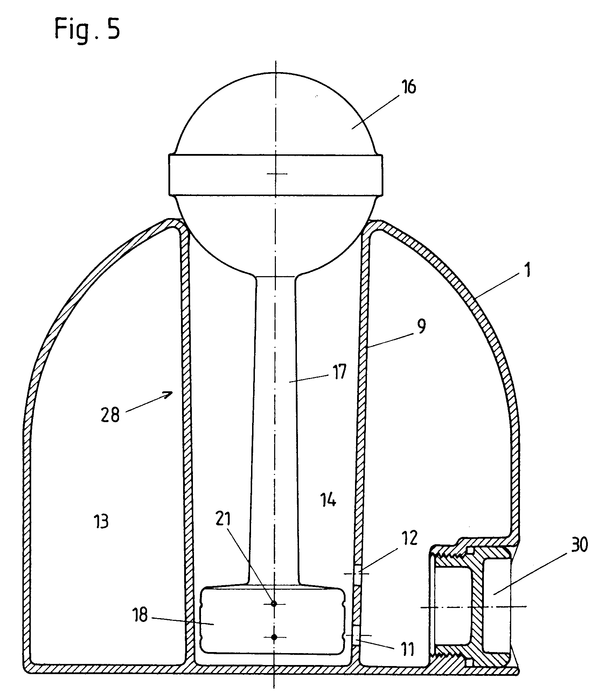

Fig. 1 einen Vertikalschnitt durch ein Weihwasserbecken und Fig. 2 einen Vertikalschnitt durch einen dazugehörenden Weihwassersprenger; Fig. 3 einen Vertikalschnitt durch Weihwasserbecken und Weihwassersprenger, wobei der Weihwassersprenger in das Weihwasserbecken eingesetzt ist; Fig. 4 ist ein Vertikalschnitt durch eine zweite Ausführungsform eines Weihwasserbeckens; Fig. 5 ist ein Vertikalschnitt durch ein weiteres Ausführungsbeispiel eines Weihwasserbeckens.

Das Weihwasserbecken nach Fig. 1 besitzt einen Behälter 1, dessen seitliche Begrenzung durch Kugelschalen 2 gebildet ist. Diese Form ist jedoch für diesen Behälter 1 nicht zwingend; dieser Behälter 1 kann jede andere beliebige Form aufweisen. Er kann von geraden, konkaven oder konvexen Seitenflächen begrenzt sein, sein Querschnitt kann rund, vieleckig, regelmäßig oder auch unregelmäßig sein. Dieser Behälter 1 ist oben und unten von jeweils ebenen Flächen 3 und 4 begrenzt, wobei die untere Fläche 3 zweckmäßigerweise hier nicht dargestellte Einrichtungen aufweist, um das Weihwasserbecken an einer Grabstätte oder an einer Gedenkstätte aufstellen zu können. Entweder kann hier ein schaftartiger Ansatz vorhanden sein zur Verbindung mit einem ortsfesten Sockel oder es kann ein Steher an der unteren Fläche 3 festgelegt sein, mit dem das Weihwasserbecken aufgestellt werden kann. Der Behälter 1 aus den Flächen 3 und 4 und den Kugelschalen 2 kann ein- oder mehrteilig ausgebildet sein. In der oberen Fläche 4 ist hier mittig eine Öffnung 5 ausgespart mit einer kragenartigen Verstärkung, an deren Innenseite eine umlaufende Nut 6 mit einer ringförmigen Dichtung 7 vorgesehen ist. Diese Öffnung 5 ist mit einem Deckel 8 verschlossen, der einen in das Innere des Behälters 1 ragenden rohrartigen Schaft 9 besitzt, dessen Boden 10 der den Boden des Behälters 1 bildenden unteren Fläche 3 unmittelbar benachbart liegt. Nahe dem Boden 10 des Schaftes 9 ist eine erste Öffnung 11, etwas darüber ca. im unteren Viertel der inneren Höhe des Schaftes 9 ist eine zweite Öffnung 12 vorgesehen. Durch diese beiden Öffnungen 11 und 12 sind die beiden Räume 13 und 14 des äußeren Behälters 1 und des durch den Schaft 9 gebildeten zweiten Behälters 28 miteinander verbunden. Der Durchmesser der Öffnungen 11 und 12 kann gleich oder verschieden sein.

Das Weihwasserbecken, wie hier in Fig. 1 dargestellt, ist rotationssymetrisch ausgestaltet, so daß die Fig. 1 dieses Weihwasserbecken eindeutig wiedergibt. Dieses Weihwasserbecken kann so groß gefertigt sein, daß der äußere Raum 13 ein oder mehrere Liter zu fassen vermag. Aus Fig. 1 ist auch erkennbar, daß der obere Teil des Schaftes 9 des Deckels 8 so ausgebildet ist, daß er an der Dichtung 7 dichtend anliegt.

Der Weihwassersprenger 15 (Fig. 2) besitzt einen kugelförmigen Handgriff 16, einen als Rohr ausgebildeten Stiel 17 sowie eine untere, hier zylinderförmige Kammer 18, wobei der Hohlraum 19 dieser Kammer 18 über den als Rohr ausgebildeten Stiel 17 und die Öffnung 20 im Handgriff 16 mit der Atmosphäre direkt verbunden ist. Die äußere Querschnittskontur der Kammer 18 ist zweckmäßigerweise korrespondierend ausgebildet zur inneren Querschnittskontur des Schaftes 9. In der zylindrischen Seitenwand der Kammer 18 sind mehrere Bohrungen 21 vorgesehen, die zweckmäßigerweise über diese Seitenfläche gleichmäßig verteilt angeordnet sind. Im Boden 22 der Kammer 18 ist eine Öffnung 23 ausgespart, die die Mündungsöffnung eines in die Kammer 18 ragenden Rohrstutzens 24 bildet. Der inneren Stirnseite dieses Rohrstutzens 24 liegt ein topfartiger Verschluß 25 auf, wobei die innere Höhe des topfartigen Verschlusses 25 größer ist als die freie Höhe zwischen dem der Stirnseite aufliegenden Verschluß und der oberen Decke 26 der Kammer 18. Auf der Oberseite dieses topfartigen Verschlusses 25 sind hier einige nach oben gerichtete Nocken 29 angeformt.

Um den Behälter 1 mit Weihwasser zu füllen, wird der Deckel 8 und der mit ihm einstückig ausgebildete Schaft 9 herausgenommen, das Weihwasser durch die Öffnung 5 eingefüllt und anschließend wird der Deckel 8 mit dem Schaft 9 wieder eingebracht, wobei durch die Dichtung 7 ein luftdichter Abschluß des Raumes 13 erzielt werden kann. Anstelle der gezeigten Steckverbindung wäre es auch möglich, hier an der Öffnung 5 einen nach oben gerichteten Kragen mit einem Gewinde vorzusehen, auf den der Deckel mit dem Schaft aufschraubbar ist. Die im Schaft 9 vorgesehenen und übereinanderliegenden Öffnungen 11 und 12 bewirken nun, daß ein Teil des im äußeren Raum 13 befindlichen Weihwassers in den Raum 14 rinnt. Die Menge, die in den Raum 14 rinnt, hängt im wesentlichen ab von der Größe der Öffnungen 11 und 12 und deren vertikalem Abstand. Das Niveau h kann in Abhängigkeit der Größe dieser Öffnungen etwas oberhalb, etwas unterhalb oder auch in der Höhe der oberen Öffnung 12 liegen.

Wird der Weihwassersprenger 15 in den Schaft 9 eingefügt (Fig. 3), so wird durch das Einführen der Kammer 18 in das Weihwasser dieses in den Rohrstutzen 24 gedrückt und hebt dabei den Verschluß 25 ab, so daß sich der Hohlraum 19 der Kammer 18 füllt. Die dadurch verdrängte und vorerst im Hohlraum 19 befindliche Luft entweicht über den rohrartigen Stiel 17 und die Entlüftungsöffnung 20. Die Nocken 29 an der Oberseite des topfartigen Verschlusses 25 stellen sicher, daß die untere Mündungsöffnung des rohrartigen Stieles 17 durch den angehobenen Verschluß 25 nicht verschlossen wird. Bei eingesetztem Weihwassersprenger 15 liegt der kugelig ausgebildete Handgriff 16 auf der oberen Mündungsöffnung 27 des Deckels 8 bzw. des Schaftes 9 auf und verhindert so das Eindringen von Schmutz, Niederschlagswasser u.dgl. Im Weihwassersprenger 15 bzw. in der Kammer 18 ist eine Weihwassermenge nun bevorratet, die dem Volumen dieser Kammer 18 entspricht.

Soll Weihwasser versprengt werden, so wird der Weihwasserspender 15 herausgenommen und in der üblichen Weise bewegt, so daß das von der Kammer 18 aufgenommene Weihwasser ausgesprengt wird, und zwar durch die Bohrungen 21, da inzwischen der Verschluß 25 den Rohrstutzen 24 durch sein Eigengewicht verschlossen hat. Die mit dem Weihwassersprenger 15 entnommene Menge fließt unverzüglich aus dem Raum 13 in den Raum 14 nach, und zwar solange, bis das Niveau wieder die Höhe h erreicht hat.

Wenn die im Raum 13 bevorratete Menge so weit verbraucht und abgesunken ist, daß ihr Niveau auf der Höhe h, also der oberen Öffnung 12 liegt, dann wirken diese beiden Räume 13 und 14 als kommunizierende Gefäße mit der Folge, daß ab diesem Zeitpunkt in den beiden Räumen 13 und 14 die Weihwassermenge gleiche Niveaustände einnimmt.

Als besondere Vorteile dieses erfindungsgemäßen Weihwasserbeckens seien erwähnt:
- Großes Reservoirvolumen - langzeitiges Wartungsintervall;
- Verschleißfreier Sprenger:
- Der Griff schützt das Weihwasserbecken vor dem Eindringen von Staub, Schmutz und Niederschlagswasser und verhindert die Verdunstung;
- Bequeme Handhabung des Weihwassersprengers: keine Betätigung von Scharnierdeckel, der Kugelgriff paßt sich der Hand optimal an.

Fig. 4 zeigt nun eine Ausgestaltung eines Weihwasserbeckens, bei dem der Boden des Behälters 1 als Deckel ausgebildet ist, der äußere Behälter 1 und der innere Behälter 28 sind einstückig gestaltet. Um den Behälter 1 zu füllen, muß er von seinem Standort abgehoben und umgekehrt werden.

Die beiden erstbeschriebenen Ausführungsbeispiele sind rotationssymmetrisch ausgebildet. Diese Rotationssymmetrie ist für die Erfindung nicht wesentlich. Es ist denkbar und möglich und liegt im Rahmen der Erfindung, das Weihwasserbecken in der Weise zu gestalten, daß die die Räume 13 und 14 begrenzenden Behälter nebeneinanderliegend angeordnet sind, wobei darüberhinaus die Vertikalachsen dieser Räume 13 und 14 miteinander einen Winkel, vorzugsweise einen spitzen Winkel, einschließen können, dies vor allem dann, wenn das Weihwasserbecken beispielsweise für eine Wandmontage vorgesehen ist. Es ist auch möglich, in der Seitenwand des Behälters 1, vorzugsweise nahe dem Boden, eine Öffnung vorzusehen, die mittels eines Stopfens 30 verschließbar ist. Nach der Entnahme des Stopfens 30 wird über diese Öffnung der Behälter 1 gefüllt. Dieser Stopfen 30 ist mit dem Behälter 1 über ein Gewinde verbunden. Ein solches Ausführungsbeispiel zeigt Fig. 5 im Vertikalschnitt. Hier wurden dieselben Hinweisziffern verwendet wie im Zusammenhang mit der Beschreibung der beiden erstbesprochenen Ausführungsbeispiele, wobei gleiche Hinweisziffern in allen Fällen gleiche oder zumindest funktionsgleiche Teile bezeichnen.

### Legende zu den Hinweisziffern:

- 1: Behälter
- 2: Kugelschale
- 3: Fläche
- 4: Fläche
- 5: Öffnung
- 6: Nut
- 7: Dichtung
- 8: Deckel
- 9: Schaft
- 10: Boden
- 11: Öffnung
- 12: Öffnung
- 13: Raum
- 14: Raum
- 15: Weihwassersprenger
- 16: Handgriff
- 17: Stiel
- 18: Kammer
- 19: Hohlraum
- 20: Öffnung
- 21: Bohrung
- 22: Boden
- 23: Öffnung
- 24: Rohrstutzen
- 25: topfartiger Verschluß
- 26: obere Decke
- 27: Mündungsöffnung
- 28: Behälter
- 29: Nocken
- 30: Stopfen

## Patentansprüche

1. Weihwasserbecken mit einem nach oben offenen Behälter zur Aufnahme einer zu versprengenden Weihwassermenge, dadurch gekennzeichnet, daß ein zweiter, verschließbarer Behälter (1) zur Aufnahme einer Vorratsmenge des Weihwassers vorgesehen ist und beiden Behältern (1, 28) zumindest eine Behälterwand gemeinsam ist und daß die beiden Behältern (1, 28) gemeinsame Behälterwand mindestens zwei, die von den Behältern (1, 28) begrenzten Räume miteinander verbindende Öffnungen (11, 12) aufweist, wobei die eine Öffnung (11) im bodennahen Bereich der beiden Behälter (1, 28) vorgesehen ist und die andere Öffnung (12) oberhalb der im bodennahen Bereich angeordneten Öffnung (11) in der Höhe vorgesehen ist, die etwa als Niveau (h) für die zu versprengende Weihwassermenge bestimmt ist.

2. Weihwasserbecken nach Anspruch 1, dadurch gekennzeichnet, daß der zur Aufnahme der Vorratsmenge dienende Behälter (1) als Hohlkörper ausgebildet ist, dessen innere Wand den Behälter (28) für die Aufnahme der zu versprengenden Weihwassermenge bildet und der Hohlkörper gebildet ist aus einem äußeren topfartigen Behälter (1) und einem am oberen Rand dieses Behälters (1) aufsetzbaren Deckel (8), der einen in das Innere des topfartigen Behälters (1), vorzugsweise bis in dessen Bodenbereich ragenden, den Behälter (28) für die Aufnahme der zu versprengenden Weihwassermenge bildenden hohlen Schaft (9) aufweist und in der Wandung dieses Schaftes (9) die übereinander liegenden Öffnungen (11, 12) vorgesehen sind.

3. Weihwasserbecken nach Anspruch 1, dadurch gekennzeichnet, daß die äußere Wand des äußeren Behälters (1) und die Wand des inneren Behälters (28) über einen oberen Rand miteinander verbunden und einstückig ausgebildet sind und der Boden des äußeren Behälters (1) durch einen auf diesen aufsetzbaren, vorzugsweise aufschraubbaren Deckel (8) gebildet ist (Fig. 4).

4. Weihwasserbecken nach Anspruch 1, dadurch gekennzeichnet, daß die obere Öffnung (12), im unteren Drittel bzw. im unteren Viertel der inneren Höhe des nach oben offenen Behälters (28) liegt.

5. Weihwasserbecken nach einem der Ansprüche 1 bis 4, dadurch gekennzeichnet, daß der innere schaft- oder rohrartige Behälter (28) einen Weihwassersprenger (15) aufnimmt, dessen Griff (16) am Rand der oberen Mündungsöffnung (27) dieses Behälters aufliegt und dessen unteres Ende als Kammer (18) ausgebildet ist zur Aufnahme des zu versprengenden Weihwassers.

6. Weihwasserbecken nach Anspruch 5, dadurch gekennzeichnet daß der Innenraum (19) der Kammer (18) über einen rohrartigen, die Kammer (18) mit dem Griff (16) verbindenden Stiel (17) mit der Atmosphäre verbunden ist.

7. Weihwasserbecken nach Anspruch 5 oder 6, dadurch gekennzeichnet, daß im Boden (22) der Kammer (18) eine mittels eines selbsttätigen Verschlusses (25) verschließbare Öffnung (23) vorgesehen ist.

8. Weihwasserbecken nach Anspruch 7, dadurch gekennzeichnet, daß die im Boden (22) der Kammer (18) vorgesehene Öffnung (23) die Mündungsöffnung eines in die Kammer (18) ragenden Rohrstutzens (24) bildet, und der inneren Stirnseite dieses Rohrstutzens (24) der topfartige Verschluß (25) aufliegt, wobei die innere Höhe des topfartigen Verschlusses (25) größer ist als die freie Höhe zwischen dem der Stirnseite aufliegenden Verschluß (25) und der oberen Decke (26) der Kammer (18).

9. Weihwasserbecken nach Anspruch 5, dadurch gekennzeichnet, daß in der Seitenwand der Kammer (18) mehrere, vorzugsweise gleichmäßig verteilte Bohrungen (21) vorgesehen sind.

10. Weihwasserbecken nach Anspruch 5, dadurch gekennzeichnet, daß der Griff (16) des Weihwassersprengers (15) kugelförmig ausgebildet ist und eine das Innere der Kammer (18) mit der Atmosphäre verbindende Öffnung (20) aufweist.

## Claims

1. An aspersorium with a container open at the top for receiving a quantity of holy water for sprinkling, **characterized in that** a second, closable container (1) is provided for receiving a reserve quantity of the holy water and at least one container wall is common to the two containers (1, 28), and the container wall common to the two containers (1, 28) is provided with at least two openings (11, 12) connecting together the spaces bounded by the containers (1, 28), wherein one opening (11) is provided in the region of the two containers (1, 28) close to the base and the other opening (12) is provided above the opening (11) situated in the region close to the base and at a height which is defined approximately as the level (**h**) for the quantity of holy water for sprinkling.

2. An aspersorium according to Claim 1, **characterized in that** the container (1) used for receiving the reserve quantity is constructed in the form of a hollow body, the inner wall of which forms the container (28) for receiving the quantity of holy water for sprinkling, and the hollow body is formed by an outer, cup-shaped container (1) and a cover (8) which can be placed on the upper edge of the said container (1) and which has a hollow shaft (9) projecting into the interior of the cup-shaped container (1), preferably into the base region thereof, and forming the container (28) for receiving the quantity of holy water for sprinkling, and the openings (11, 12) arranged one above the other are provided in the walling of the said shaft (9).

3. An aspersorium according to Claim 1, **characterized in that** the outer wall of the outer container (1) and the wall of the inner container (28) are joined together by way of an upper edge and are constructed in one piece, and the base of the outer container (1) is formed by a cover (8) which can be placed, and preferably screwed, thereon (Fig. 4).

4. An aspersorium according to Claim 1, **characterized in that** the upper opening (12) is situated in the lower third or in the lower quarter of the internal height of the container (28) open at the top.

5. An aspersorium according to one of Claims 1 to 4, **characterized in that** the inner shaft-like or tube-like container (28) receives an aspergillum (15), the handle (16) of which rests against the edge of the upper opening (27) of the said container and the lower end of which is constructed as a chamber (18) for receiving the holy water for sprinkling.

6. An aspersorium according to Claim 5, **characterized in that** the interior (19) of the chamber (18) is connected to the atmosphere by way of a tube-like stem (17) which connects the chamber (18) to the handle (16).

7. An aspersorium according to Claim 5 or 6, **characterized in that** an opening (23), which can be closed by means of an automatic closure (25), is provided in the base (22) of the chamber (18).

8. An aspersorium according to Claim 7, **characterized in that** the opening (23) provided in the base (22) of the chamber (18) forms the opening of a tube connexion (24) which projects into the chamber (18), and the cup-like closure (25) rests on the inner end face of the said tube connexion (24), wherein the internal height of the cup-like closure (25) is greater than the free height between the closure (25) resting on the inner end face and the upper cover (26) of the chamber (18).

9. An aspersorium according to Claim 5, **characterized in that** a plurality of bores (21), preferably uniformly distributed, are provided in the lateral wail of the chamber (18).

10. An aspersorium according to Claim 5, **characterized in that** the handle (16) of the aspergillum (15) is made spherical and has an opening (20) connecting the interior of the chamber (18) to the atmosphere.

## Revendications

1. Bénitier comprenant un récipient (28) ouvert en haut, pour recevoir la quantité d'eau bénite à projeter,
caractérisé en ce qu'
il est prévu, pour y loger une réserve d'alimentation en eau bénite, un second récipient (1), qui peut être fermé, les deux récipients (1, 28) ayant au moins une paroi commune percée d'au moins deux ouvertures (11, 12) reliant les volumes internes délimités par les récipients (1, 28), une de ces ouvertures (11), étant située près du fond des deux récipients tandis que l'autre ouverture, (12) est située, à une hauteur correspondant sensiblement au niveau (h) prévu pour la quantité d'eau bénite à projeter.

2. Bénitier selon la revendication 1,
caractérisé en ce que
le récipient (1) prévu pour loger la réserve d'eau est un corps creux dont la paroi interne forme le récipient (28) où se trouve l'eau bénite à projeter, ce corps creux étant constitué d'un récipient (1) ayant extérieurement la forme d'un pot et sur le bord supérieur duquel peut être posé un couvercle (8) portant, faisant saillie vers l'intérieur de récipient (1) et descendant de préférence jusqu'auprès du fond du récipient, une tige creuse (9) servant de logement à l'eau à projeter et dont la paroi est percée des ouvertures superposées (11, 12).

3. Bénitier selon la revendication 1,
caractérisé en ce que
la paroi externe du récipient externe (1) et la paroi du récipient interne (28) sont reliées entre elles le long de leur bord supérieur, les deux récipients formant une seule pièce, le fond du récipient externe (1) étant constitué par un couvercle (8) qui peut être monté sur le récipient, de préférence par vissage.

4. Bénitier selon la revendication 1,
caractérisé en ce que
l'ouverture supérieure (12) est située dans le tiers ou le quart inférieur de la hauteur intérieure du récipient (28) ouvert en haut.

5. Bénitier selon une des revendications 1 à 4,
caractérisé en ce que
le récipient interne (28) en forme de tige ou de tube reçoit un goupillon (15) dont la poignée (16) repose sur le bord de l'embouchure (27) de ce récipient, l'extrémité inférieure de la tige ayant la forme d'une chambre (18) recevant l'eau à projeter.

6. Bénitier selon la revendication 5,
caractérisé en ce que
le volume interne (19) de la chambre (18) est relié à l'atmosphère par le manche (17) reliant la chambre (18) à la poignée (16).

7. Bénitier selon la revendication 5 ou 6,
caractérisé en ce que
dans le fond (22) de la chambre (18) est percée une ouverture (23) qui peut être obturée par une fermeture automatique (25).

8. Bénitier selon la revendication 7,
caractérisé en ce que
l'ouverture (23) prévue dans le fond (22) de la chambre (18) constitue l'embouchure d'une tubulure (24) pénétrant dans la chambre (18), et sur la face frontale de laquelle repose la fermeture (25) en forme de pot dont la hauteur interne est supérieure à la hauteur libre existant entre la fermeture (25) posée sur la face frontale et le plafond (26) de la chambre (18).

9. Bénitier selon la revendication 5,
caractérisé en ce qu'
il est prévu, dans la paroi latérale de la chambre (18), plusieurs perçages (21), de préférence régulièrement répartis.

10. Bénitier selon la revendication 5,
caractérisé en ce que
la poignée (16) du goupillon (15) a une forme sphérique et est percée d'une ouverture (20) mettant l'intérieur de la chambre (18) en liaison avec l'atmosphère.
